# FASCICULE DE BREVET EUROPEEN

(11) **EP 1 378 314 B1**
(45) Date de publication et mention de la délivrance du brevet: **05.11.2008**
(21) Numéro de dépôt: 03291373.3
(22) Date de dépôt: 10.06.2003
(51) Int. Cl.: B23K 26/12, B23K 35/38, B23K 26/32

(54) **Soudage par faisceau laser de tôles fines, en particulier d'éléments constitutifs d'appareils électroménagers**
Laserstrahlschweissen von dünnen Blechen, insbesondere von Bauteilen von Haushaltgeräten
Laser beam welding of thin sheet metal, in particular of elements included in household appliances

(30) Priorité: 04.07.2002 FR 0208385
(43) Date de publication de la demande: 07.01.2004
(73) Titulaire: L'AIR LIQUIDE, Société Anonyme pour l'Etude et l'Exploitation des Procédés Georges Claude, 75007 Paris (FR)
(72) Inventeur: Chouf, Karim, 93800 Epinay S/Seine (FR); Verna, Eric, 95650 Boissy l'Aillerie (FR); Briand, Francis, 75009 Paris (FR)
(74) Mandataire: Pittis, Olivier

(56) Documents cités:
- EP-A- 0 579 205
- EP-A- 0 628 377
- EP-A- 1 022 087
- US-B1- 6 281 472

## Description

La présente invention concerne un procédé de soudage selon le préambule de la revendication 1 et en particulier l'utilisation de mélanges gazeux formés d'un mélange d'hélium et d'argon dans un procédé de soudage laser de tôles fines en acier, typiquement de moins de 1.5 mm d'épaisseur, destinées à être subséquemment utilisées dans les secteurs de l'électroménager ou du ménager.

Lors de la fabrication de nombreux produits industriels du domaine de l'électroménager, tels les machines à laver la vaisselle ou le linge, ou les fours à micro-ondes, et du ménager, tels les couverts, les plats, les éviers, les récipients de cuisson, il est nécessaire de souder ensemble des tôles d'acier de fines épaisseurs.

La plupart du temps, ces tôles sont en acier inoxydable mais il arrive que des tôles en acier carbone-manganèse galvanisées ou électro-zinguées, c'est-à-dire recouvertes d'une fine pellicule de zinc, soient utilisées.

Les produits électroménagers ou ménagers susmentionnés étant destinés à une diffusion commerciale à grande échelle, il est nécessaire de pouvoir atteindre des vitesses de soudage élevées, typiquement d'au moins 5 m/min, de préférence 6 à 8 m/min, pour que la productivité du processus global de fabrication soit aussi élevée que possible et donc que les coûts soient minimisés.

Il a déjà été proposé de souder des tôles d'acier dans une telle configuration en mettant en oeuvre un faisceau laser.

Ainsi, le document EP-A-628377 décrit un procédé de soudage selon le préambule de la revendication 1, d'aciers alliés ou non alliés mettant en oeuvre un faisceau laser et utilisant un mélange gazeux formé de 18% à 55% en volume d'argon et d'hélium pour le reste pour souder des épaisseurs de tôle supérieures à 2 mm à des vitesses de soudage de 2 m/min ou inférieures.

En effet, le soudage par faisceau laser est un procédé d'assemblage très performant car il permet d'obtenir, à des vitesses élevées, des profondeurs de pénétration très importantes si on les compare à d'autres procédés plus traditionnels, tel le soudage plasma, le soudage MIG (Metal Inert Gas) ou le soudage TIG (Tungsten Inert Gas).

Ceci s'explique par les fortes densités de puissances mises en jeu lors de la focalisation, par un ou plusieurs miroirs ou lentilles, du faisceau laser au niveau du plan de jonction des pièces à souder, par exemple des densités de puissance pouvant dépasser 10⁶ W/cm²

Ces fortes densités de puissance provoquent une forte vaporisation à la surface des pièces qui, en se détendant vers l'extérieur, induit un creusement progressif du bain de soudage et conduit à la formation d'un capillaire de vapeur étroit et profond, appelé "*keyhole*" en anglais (= "trou de serrure") dans l'épaisseur des tôles, c'est-à-dire au niveau du plan de joint.

Ce capillaire permet un dépôt direct de l'énergie du faisceau laser en profondeur dans la tôle et ce, par opposition avec les procédés de soudage plus conventionnels où le dépôt d'énergie est localisé à la surface.

A ce titre, on peut citer les documents suivants : DE-A-2713904, DE-A-4034745, JP-A-01048692, JP-A-56122690, WO 97/34730, JP-A-01005692, DE-A-4123716, JP-A-02030389, US-A-4,871,897, JP-A-230389, JP-A-62104693, JP-A-15692, JP-A-15693, JP-A-15694, JP-A-220681, JP-A-220682, JP-A-220683, WO-A-88/01553, WO-A-98/14302 DE-A-3619513 et DE-A-3934920.

Ce capillaire est constitué d'un mélange de vapeurs métalliques et de plasma de vapeurs métalliques dont la particularité est d'absorber le faisceau laser et donc de piéger l'énergie au sein du capillaire même.

Cependant, une des problématiques du soudage laser est la formation d'un plasma de gaz de couverture.

En effet, ce plasma de vapeurs métalliques, en ensemençant en électrons libres le gaz de couverture ou gaz de protection, peut déclencher l'apparition d'un plasma de gaz de couverture qui est préjudiciable à l'opération de soudage.

Le faisceau laser incident peut alors être fortement perturbé par le plasma de gaz de couverture.

L'interaction du plasma de gaz de couverture avec le faisceau laser peut prendre diverses formes mais, le plus souvent, cela se traduit par un effet d'absorption et/ou de diffraction du faisceau laser incident qui peut conduire à une réduction importante de la densité de puissance laser efficace à la surface de la cible, entraînant une diminution de la profondeur de pénétration, voire une perte de couplage entre le faisceau et la matière et donc à une interruption momentanée du processus de soudage.

Le seuil de densité de puissance à partir duquel le plasma apparaît dépend du potentiel d'ionisation du gaz de couverture utilisé et est inversement proportionnel au carré de la longueur d'onde du faisceau laser.

Ainsi, il est très difficile de souder sous argon pur avec un laser de type CO₂, tandis que cette opération peut être réalisée avec beaucoup moins de problème avec un laser de type YAG.

En général, en soudage laser CO₂, on utilise comme gaz de couverture de l'hélium qui est un gaz à haut potentiel d'ionisation et qui permet de se prémunir de l'apparition du plasma de gaz de couverture et ce, jusqu'à une puissance laser d'au moins 45 kW.

L'hélium a cependant l'inconvénient d'être un gaz onéreux et de nombreux utilisateurs de laser préféraient utiliser d'autres gaz ou mélanges gazeux moins onéreux que l'hélium mais qui permettraient néanmoins de limiter l'apparition du plasma de gaz de couverture et donc d'obtenir des résultats de soudage similaires à ceux obtenus avec l'hélium mais à un coût moindre.

Ainsi, il existe au plan commercial des mélanges gazeux contenant de l'argon et de l'hélium, par exemple le mélange gazeux contenant 30 % en volume d'hélium et le reste étant de l'argon, commercialisé sous l'appellation LASAL™ 2045 par la société L'AIR pour des puissances laser CO₂ inférieures à 5kW et pourvu que les densités de puissance engendrées ne soient pas trop importantes, c'est-à-dire environ supérieures à 2000 kW/cm².

Cependant, le problème qui se pose avec ce type de mélange Ar/He est que pour des densités de puissance laser plus importantes, il n'est plus adapté car le seuil de création du plasma de gaz de protection est alors dépassé, ce qui empêche l'obtention d'une soudure à pleine pénétration, lors du soudage d'un tube en acier inoxydable.

Or, dans le cas du soudage de la plupart des pièces d'appareils électroménager, il est primordial que la pénétration de la soudure soit totale ou quasi-totale pour éviter toute rupture ultérieure de la pièce ainsi soudée, lors des opérations de mise en forme ou lors de son utilisation subséquente, c'est-à-dire lorsque la pièce est soumise à des contraintes diverses, telles que thermiques et/ou mécaniques.

De plus, il se pose avec de type de pièces de fines épaisseurs, un problème très particulier.

En effet, lorsqu'on soude des tôles fines de moins de 1,5 mm, on fait souvent face du coté envers de la soudure, c'est-à-dire à la sortie du "keyhole" qui se forme, à des densités de puissance encore extrêmement importantes qui peuvent conduire à générer un plasma dudit coté envers.

Or, un tel plasma est évidement rédhibitoire pour la réalisation d'un cordon de soudure.

Le but de la présente invention est alors de proposer un procédé de soudage par laser de pièces de fines épaisseurs, typiquement de moins de 1.5 mm et de préférence de moins de 1 mm, entrant dans la composition d'appareils électroménagers et autres produits ménagers, plus particulièrement en aciers inoxydables austénitiques et ferritiques, et en aciers galvanisés ou électro-zingués, utilisant un mélange gazeux de soudage composé d'hélium et d'argon en des teneurs spécifiques pouvant être mis en oeuvre avec un laser de puissance jusqu'à 12 kW, lequel conduise à l'obtention d'un joint de soudure à pleine pénétration efficace et sans formation de plasma du côté envers de la soudure et ce, malgré la fine épaisseur des tôles ainsi soudées.

La solution de l'invention est alors un procédé de soudage d'au moins une feuille en acier inoxydable ou en acier revêtu mettant en oeuvre au moins un faisceau laser ayant une puissance allant jusqu'à 12 kw,
caractérisé en ce qu'on utilise un mélange gazeux constitué de 40% à 60% en volume d'argon et d'hélium pour le reste (jusqu'à 100%) pour souder au moins une feuille ayant une épaisseur comprise entre 0.3 et 1.5 mm, la vitesse de soudage étant d'au moins 5 m/min et le soudage étant opéré à pénétration totale ou quasi-totale.

Dans le cadre de la présente invention, le terme "feuille" est considéré comme totalement équivalent des termes "pièce", "tôle", "plaque" ou de tout autre terme analogue désignant un matériau métallique de fine épaisseur devant être soudé.

Selon le cas, le procédé de soudage de l'invention peut comprendre l'une ou plusieurs des caractéristiques techniques suivantes :
- on soude une seule feuille sur elle même, après une étape de mise en forme, ou on soude plusieurs feuilles métalliques l'une avec l'autre.
- les feuilles d'acier ont une épaisseur de l'ordre de 0.3 mm à 1 mm.
- les feuilles sont en acier inoxydable de type ferritique ou austénitique.
- les feuilles sont en acier HLES (acier à Haute Limite Elastique).
- les feuilles à souder ont un revêtement surfacique de zinc, en particulier des tôles d'acier électrozinguées ou galvanisées.
- les feuilles à souder sont disposées et soudées à clin, en bord-à-bord, par transparence ou en angle.
- le laser est de type CO₂ ou YAG.
- la tâche focale est circulaire ou oblongue.
- le mélange gazeux est constitué de 43 à 57% en volume d'argon et d'hélium pour le reste (jusqu'à 100%).
- le mélange gazeux est constitué de 45 à 55% en volume d'argon et d'hélium pour le reste (jusqu'à 100%).
- le mélange gazeux est constitué d'environ 50 % en volume d'argon et d'environ 50% en volume d'hélium.
- le débit de gaz est compris entre 5 l/min et 100 l/min.
- la pression du gaz est comprise entre 1 et 5 bars.
- la buse distribuant le gaz est une buse latérale ayant un diamètre allant de 3 à 30 mm ou une buse axiale ayant un diamètre allant de 1 à 50 mm.
- la feuille métallique est animée d'une vitesse de déplacement non-nulle par rapport à la tête de soudage délivrant le faisceau laser.

Dans le cas de produits électroménagers, tel un lave-linge ou un sèche-linge, on part d'une feuille d'acier plane que l'on ajuste suivant la forme que l'on désire (mise en forme), le plus souvent sous la forme d'un tube de diamètre important, par exemple de plusieurs dizaines de centimètres dans le cas d'un tambour de machine à laver ou d'un tambour de sèche-linge, avant de souder longitudinalement entre eux les bords de la tôle ainsi formée.

Après cela, on vient donner au tube creux ainsi soudé la forme et/ou le diamètre final désiré par expansion, par formage ou par emboutissage mécanique.

Le soudage est généralement réalisé dans une configuration bord à bord ou à clin. Le faisceau laser de type CO₂ est focalisé à la surface de la tôle à souder par un miroir parabolique de focale comprise entre 100 et 250 mm, de préférence 200mm.

Compte tenu des faibles épaisseurs à souder qui sont comprises typiquement entre 0.3 et 1 mm, la puissance du laser mise en oeuvre est préférentiellement inférieure à 5 kW, plus généralement de l'ordre de 2 à 3 kW, cette valeur dépendant directement des autres paramètres de fonctionnement.

Les vitesses de soudage utilisées sont supérieures à 5 m/min.

Le gaz est distribué près de la zone d'interaction par des buses latérales ou coaxiales, à des débits compris entre 10 et 30 l/min.

Habituellement ce type de soudage se fait dans une enceinte fermée et c'est la tête de focalisation qui se déplace, donnant ainsi le mouvement nécessaire au faisceau laser focalisé pour réaliser la soudure. Dans d'autres cas, la tête de focalisation reste fixe et c'est la tôle qui se déplace. Tout dépend du type et de l'emplacement de la soudure que l'on désire réaliser.

### Exemple

Dans le cas du soudage d'un tambour de machine à laver, c'est la tête de focalisation qui se déplace et la configuration de soudage est de type bord à bord.

La distance focale est de 200 mm.

Les tôles en acier inoxydable formant le tambour ont une épaisseur de l'ordre de 0,4 mm.

La soudure est réalisée par soudage laser avec un mélange gazeux contenant au moins 40% d'argon et de l'hélium pour le reste, par exemple un mélange gazeux formé de 50% Ar et de 50% He (% en vol.), le gaz étant distribué dans la zone d'interaction par une ou plusieurs buses cylindriques disposées autour de la zone d'interaction.

Dans ce cas, la vitesse de soudage atteinte, pour un soudage à pleine pénétration sans formation de plasma côté envers et obtention d'un joint de qualité élevée, est de l'ordre de 7 m/mn à 3 kW.

## Revendications

1. Procédé de soudage d'au moins une feuille en acier inoxydable ou en acier revêtu mettant en oeuvre au moins un faisceau laser ayant une puissance allant jusqu'à 12 kW, **caractérisé en ce qu'**on utilise un mélange gazeux constitué de 40% à 60% en volume d'argon et d'hélium pour le reste (jusqu'à 100%) pour souder au moins une feuille ayant une épaisseur comprise entre 0.3 et 1.5 mm, la vitesse de soudage étant d'au moins 5 m/min et le soudage étant opéré à pénétration totale ou quasi-totale.

2. Procédé selon la revendication 1, **caractérisé en ce que** les feuilles métalliques sont en acier inoxydable ferritique ou austénitique.

3. Procédé selon l'une des revendications 1 à 2, **caractérisé en ce que** les feuilles métalliques sont en acier recouvert de zinc de type galvanisé ou électro-zingué.

4. Procédé selon l'une des revendications 1 à 3, **caractérisé en ce que** la vitesse de soudage est comprise entre 6 et 8 m/min.

5. Procédé selon l'une des revendications 1 à 4, **caractérisé en ce que** la puissance laser est comprise entre 2 et 12 kW, de préférence entre 3 et 8 kW.

6. Procédé selon l'une des revendications 1 à 5, **caractérisé en ce que** le mélange gazeux est constitué de 43% à 57% en volume d'argon et d'hélium pour le reste (jusqu'à 100%).

7. Procédé selon l'une des revendications 1 à 6, **caractérisé en ce que** le mélange gazeux est constitué de 45% à 55% en volume d'argon et d'hélium pour le reste (jusqu'à 100%)

8. Procédé selon l'une des revendications 1 à 7, **caractérisé en ce que** la ou les feuilles à souder ont une épaisseur inférieure à 1 mm.

9. Procédé de fabrication d'un élément d'appareil électroménager, dans lequel au moins une partie de l'élément est fabriquée par mise en oeuvre d'un procédé de soudage selon l'une des revendications 1 à 8, de préférence l'élément est un tambour d'appareil à laver ou à sécher le linge, une cuve de machine à laver la vaisselle, ou une carcasse de four à micro-ondes, de réfrigérateur ou de congélateur.

10. Procédé de fabrication d'au moins un élément ménager en acier, dans lequel au moins une partie dudit élément est obtenu par mise en oeuvre d'un procédé de soudage selon l'une des revendications 1 à 8, de préférence l'élément ménager en acier est formé par les plats, les récipients de cuisson, les éviers et les couverts.

## Claims

1. Method of welding at least one sheet made of stainless steel or coated steel employing at least one laser beam having a power up to 12 kW, **characterized in that** a gas mixture is used consisting of 40% to 60% argon by volume and helium for the remainder (up to 100%) to weld at least one sheet having a thickness of between 0.3 and 1.5 mm, the welding speed being at least 5 m/min and the welding being carried out at full or almost full penetration.

2. Method according to Claim 1, **characterized in that** the metal sheets are made of ferritic or austenitic stainless steel.

3. Method according to one of Claims 1 to 2, **characterized in that** the metal sheets are made of steel coated with galvanized or electrogalvanized zinc.

4. Method according to one of Claims 1 to 3, **characterized in that** the welding speed is between 6 and 8 m/min.

5. Method according to one of Claims 1 to 4, **characterized in that** the laser power is between 2 and 12 kW, preferably between 3 and 8 kW.

6. Method according to one of Claims 1 to 5, **characterized in that** the gas mixture consists of 43% to 57% argon by volume and helium for the remainder (up to 100%).

7. Method according to one of Claims 1 to 6, **characterized in that** the gas mixture consists of 45% to 55% argon by volume and helium for the remainder (up to 100%).

8. Method according to one of Claims 1 to 7, **characterized in that** the sheet(s) to be welded is (are) of a thickness less than 1 mm.

9. Method of manufacturing an element of a piece of electrical equipment, in which at least one part of the element is manufactured by employing a welding method according to one of Claims 1 to 8; the element is preferably a drum of a washing machine or a dryer, the tub of a dishwasher, or the body of a microwave oven, a refrigerator or a freezer.

10. Method of manufacturing at least one domestic element made of steel, in which at least one part of said element is obtained through a welding method according to one of Claims 1 to 8; preferably the domestic element made of steel is formed by dishes, cooking vessels, sinks and covers.

## Patentansprüche

1. Schweißverfahren für mindestens ein Blech aus Edelstahl oder beschichtetem Stahl, wobei mindestens ein Laserstrahl mit einer Leistung von bis zu 12 kW zum Einsatz kommt, **dadurch gekennzeichnet, dass** zum Schweißen mindestens eines Blechs mit einer Dicke von 0,3 bis 1,5 mm ein Gasgemisch verwendet wird, das zu 40 bis 60 Volumen-% aus Argon besteht, während Helium den Rest ausmacht (Ergänzung auf 100 %), wobei die Schweißgeschwindigkeit mindestens 5 m/min beträgt und der Schweißvorgang derart durchgeführt wird, dass es zu einem vollständigen oder fast vollständigen Eindringen kommt.

2. Verfahren nach dem Anspruch 1, **dadurch gekennzeichnet, dass** die Metallbleche aus ferritischem oder austenitischem Edelstahl bestehen.

3. Verfahren nach einem der Ansprüche 1 bis 2, **dadurch gekennzeichnet, dass** die Metallbleche aus feuerverzinktem oder elektrolytisch verzinktem Stahl bestehen.

4. Verfahren nach einem der Ansprüche 1 bis 3, **dadurch gekennzeichnet, dass** die Schweißgeschwindigkeit 6 bis 8 m/min beträgt.

5. Verfahren nach einem der Ansprüche 1 bis 4, **dadurch gekennzeichnet, dass** die Laserleistung 2 bis 12 kW, vorzugsweise 3 bis 8 kW, beträgt.

6. Verfahren nach einem der Ansprüche 1 bis 5, **dadurch gekennzeichnet, dass** das Gasgemisch zu 43 bis 57 Volumen-% aus Argon besteht und Helium den Rest ausmacht (Ergänzung auf 100%).

7. Verfahren nach einem der Ansprüche 1 bis 6, **dadurch gekennzeichnet, dass** das Gasgemisch zu 45 bis 55 Volumen-% aus Argon besteht und Helium den Rest ausmacht (Ergänzung auf 100%).

8. Verfahren nach einem der Ansprüche 1 bis 7, **dadurch gekennzeichnet, dass** das/die zu verschweißende(n) Blech(e) eine Dicke von weniger als 1 mm aufweist/aufweisen.

9. Herstellungsverfahren für ein Element eines elektrischen Haushaltsgeräts, wobei mindestens ein Teil des Elements hergestellt wird, indem ein Schweißverfahren nach einem der Ansprüche 1 bis 8 zur Anwendung kommt, wobei es sich bei dem Element vorzugsweise um eine Trommel einer Waschmaschine oder eines Wäschetrockners, um einen Innenbehälter einer Geschirrspülmaschine oder um eine Gerüststruktur eines Mikrowellenofens eines Kühlschranks oder eines Gefrierschranks handelt.

10. Herstellungsverfahren für mindestens ein Haushaltselement aus Stahl, wobei mindestens ein Teil des Elements erhalten wird, indem ein Schweißverfahren nach einem der Ansprüche 1 bis 8 zur Anwendung kommt, wobei es sich bei dem Haushaltselement aus Stahl vorzugsweise um Ess- und Serviergeschirr, Kochbehältnisse, Spülbecken und Besteck handelt.
